(19)

Europäisches
Patentamt
European
Patent Office
Office européen
des brevets

(11)  **EP 3 985 851 B1**

(12)  **EUROPEAN PATENT SPECIFICATION**

(45) Date of publication and mention
of the grant of the patent:
**18.03.2026  Bulletin 2026/12**

(51) International Patent Classification (IPC):
*H02M 1/32* (2007.01)     *H02M 7/483* (2007.01)

(52) Cooperative Patent Classification (CPC):
**H02M 1/32; H02M 7/4835**

(21) Application number: **20275159.0**

(22) Date of filing: **16.10.2020**

(54) **IMPROVEMENTS IN OR RELATING TO VOLTAGE SOURCE CONVERTERS**

VERBESSERUNGEN AN ODER IM ZUSAMMENHANG MIT SPANNUNGSQUELLENUMRICHTERN

AMÉLIORATIONS SE RAPPORTANT OU APPORTÉES À DES CONVERTISSEURS DE SOURCE
DE TENSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.04.2022  Bulletin 2022/16**

(73) Proprietor: **GE Vernova Technology GmbH
5400 Baden (CH)**

(72) Inventors:
• **LI, Jiaqi**
**91300 Massy (FR)**
• **DE PREVILLE, Guillaume**
**91300 Massy (FR)**
• **FREYTES, Julian**
**91300 Massy (FR)**

(74) Representative: **Openshaw & Co.
8 Castle Street
Farnham, Surrey GU9 7HR (GB)**

(56) References cited:
**JP-A- 2003 134 843**

• **LI RUI ET AL: "Enhanced Flat-Topped Modulation
for MMC Control in HVDC Transmission
Systems", IEEE TRANSACTIONS ON POWER
DELIVERY, vol. 32, no. 1, February 2017
(2017-02-01), US, pages 152 - 161, XP055788559,
ISSN: 0885-8977, DOI: 10.1109/
TPWRD.2016.2561929**
• **LOPEZ MARIO ET AL: "Operation of modular
multilevel converters under voltage constraints",
2015 IEEE ENERGY CONVERSION CONGRESS
AND EXPOSITION (ECCE), IEEE, 20 September
2015 (2015-09-20), pages 3550 - 3556,
XP032801051, DOI: 10.1109/ECCE.2015.7310162**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

This invention relates to a voltage source converter, for transferring power between AC and DC networks, and to a method of operating such a voltage source converter.

In HVDC power transmission networks AC power is typically converted to DC power for transmission via overhead lines, under-sea cables and/or underground cables. This conversion removes the need to compensate for the AC capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks.

The conversion between DC power and AC power is utilised where it is necessary to interconnect DC and AC networks. In any such power transmission network, converters (i.e. power converters) are required at each interface between AC and DC power to effect the required conversion from AC to DC or from DC to AC.

One type of power converter is a voltage source converter, although other types of power converter are also possible.

LI RU ET AL: "Enhanced Flat -Topped Modulation for MMC Control in HVDC Transmission Systems", IEEE TRANSACTIONS ON POWER DELIVERY, vol. 32, no. 1, February 2017, pages 152-161, proposes the use of an optimized flat-topped modulation scheme for modular multilevel converter (MMC) control. The operating principle of the flat-topped scheme is presented and the Fourier coefficients are compared with the SVM technique. In addition, the influence of the proposed control scheme on MMC performance is evaluated mathematically. Simulation of a point-to point HVDC link using the average model demonstrates the effectiveness of the proposed MMC operational schemes.

According to a first aspect of the invention there is provided a voltage source converter according to claim 1.

Maintaining each established AC phase voltage demand within predetermined limits is desirable, e.g. under extreme voltage source converter operating conditions, because it avoids unwanted conduction through one or more chain-link modules and helps to eliminate unwelcome harmonics generation in one or more chain-link modules, which delivers better quality power.

Meanwhile, basing the magnitude limit applied to the fundamental AC phase voltage reference on the expected contribution of both the fundamental AC phase voltage reference and the harmonic voltage injection, ensures that the overall contribution of the harmonic voltage injection is taken into account, and thereby helps to ensure that any shifted harmonic voltage injection that might arise, e.g. when the voltage source converter is required to operate with unbalanced AC voltages at the AC terminals in order to eliminate any unbalanced currents, does not result in an asymmetrical voltage over-demand being applied to the chain-link converters within a given converter limb, which can lead to a very undesirable imbalance in the energy stored by the energy storage devices within the chain-link modules thereof.

Establishing first and second proportion factors allows the relative contributions of the fundamental and harmonic voltages to be captured, and therefore permits more accurate limiting of the fundamental AC phase voltage reference to take place. Knowledge of the anticipated maximum resulting AC voltage demand is helpful as it desirably permits the relative contributions of the fundamental and harmonic voltages to be determined at the instant when they have the most impact on the overall AC voltage demand, and thereby helps to improve further the accuracy with which their contributions are assessed.

Estimating an angle permits that information, i.e. the instant within the expected operating cycle of the converter limb, to be captured and utilised subsequently to accurately assess the maximum relative contributions of the fundamental and harmonic voltages.

Employing an iterative process desirably establishes the estimated angle to an acceptable degree of accuracy without imparting an undue processing burden on the controller.

Having the controller use the estimated angle to determine the first and second proportion factors at the anticipated maximum resulting AC voltage demand helps to ensure that the most accurate assessment of the relative contributions of the fundamental and harmonic voltages is carried out, and therefore assists in ensuring the most accurate overall limiting of the resulting AC phase voltage demand to thus avoid the undesirable problems associated with the demand exceeding the predetermined limit.

Equating the first proportion factor and amplitude of the fundamental AC voltage reference along with the second proportion factor and amplitude of the harmonic voltage injection to the predetermined limit to establish corresponding positive and negative sequence magnitudes applicable to each amplitude in order to meet the predetermined limit makes use of the relative nature of the first and second proportion factors to establish otherwise variable positive and negative sequence magnitudes, which are applicable to the desired operating limits of the voltage source converter concerned, and so can then be utilised to limit the magnitude of the established AC phase voltage demand accordingly.

The controller may be programmed to limit the magnitude of the fundamental AC phase voltage reference using elliptic limiting incorporating the established positive and negative sequence magnitudes.

Elliptic limiting desirably takes into account both the magnitude and phase angle of a voltage reference.

In a further preferred embodiment of the invention the controller is programmed to extend the elliptic limiting by applying the first proportion factor to an elliptic limiting expression and introducing a harmonic limiting expression incorporating the second proportion factor.

Applying the first proportion factor to an elliptic limiting expression and introducing a harmonic limiting expression incorporating the second proportion factor to a known elliptic formula beneficially integrates the relative weighting, i.e. contribution, of the fundamental and harmonic voltages into an already desirable way of limiting the magnitude of a voltage reference.

Optionally the controller is programmed to establish the minimum limited magnitude amongst all of limited fundamental AC phase voltage references and to utilise the minimum limited magnitude of fundamental AC phase voltage reference to establish each AC phase voltage demand.

Utilising the minimum limited magnitude of fundamental AC phase voltage reference to establish each AC voltage demand, desirably ensures no such demand exceeds the predetermined limit associated therewith.

According to a second aspect of the invention there is provided a method of controlling a voltage source converter according to claim 5

The method of the invention shares the benefits of the corresponding features of the voltage source converter of the invention.

It will be appreciated that the use of the terms "first" and "second", and the like, in this patent specification is merely intended to help distinguish between similar features (e.g. the first and second DC terminals), and is not intended to indicate the relative importance of one feature over another feature, unless otherwise specified.

There now follows a brief description of preferred embodiments of the invention, by way of non-limiting example, with reference being made to the following figures in which:

Figure 1 shows a schematic view of a voltage source converter according to a first embodiment of the invention;

Figure 2 illustrates schematically the operation of a controller which forms a part of the voltage source converter shown in Figure 1;

Figures 3(a) and 3(b) illustrate schematically a limiting step carried out by the controller shown in Figure 2; and

Figure 4 shows a practical implementation of how the controller establishes first and second proportion factors as part of the limiting step shown in Figures 3(a) and 3(b).

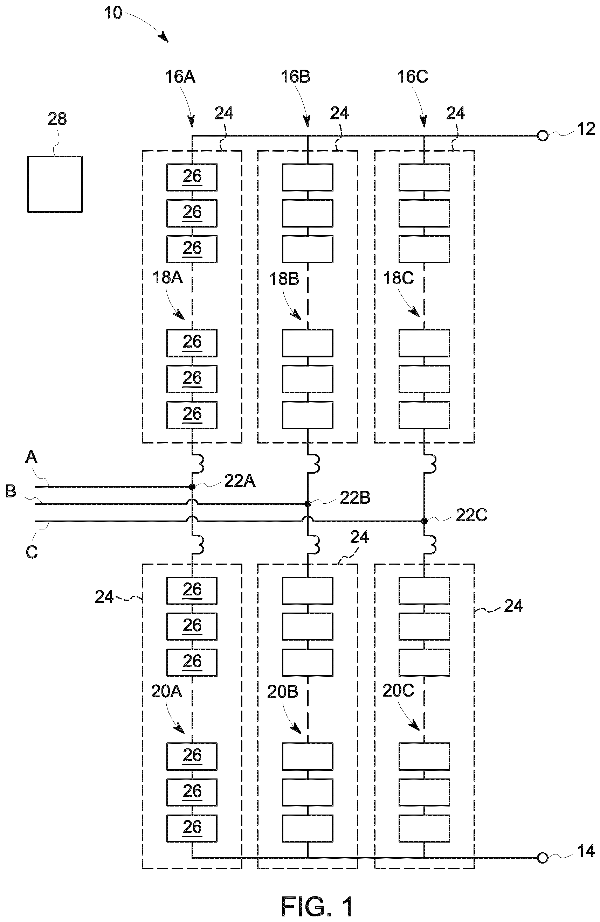

A voltage source converter according to a first embodiment of the invention is designated generally by reference numeral 10, as shown in Figure 1.

The voltage source converter 10 includes first and second DC terminals 12, 14, between which extends three converter limbs 16A, 16B, 16C, each of which corresponds to a given phase A, B, C of a three-phase AC network with which the converter 10 is, in use, connected.

Each converter limb 16A, 16B, 16C includes first and second limb portions 18A, 18B, 18C, 20A, 20B, 20C which are separated by a corresponding AC terminal 22A, 22B, 22C.

In use the first and second DC terminals 12, 14 are connected to a DC network, and each AC terminal 22A, 22B, 22C is connected to a respective phase A, B, C of the AC network.

Other embodiments of the invention may include fewer than or greater than three converter limbs, depending on the configuration of an associated AC network with which the voltage source converter of the invention is intended to be connected.

Meanwhile, returning to the embodiment shown, each limb portion 18A, 18B, 18C, 20A, 20B, 20C includes a chain-link converter 24 which extends between the associated AC terminal 22A, 22B, 22C and a corresponding one of the first or the second DC terminal 12, 14.

Each chain-link converter 24 includes a plurality of series connected chain-link modules 26.

Each chain-link module 26 includes a number of switching elements (not shown) which are connected in parallel with an energy storage device in the form of a capacitor, although other types of energy storage device, i.e. any device that is capable of storing and releasing energy to selectively provide a voltage, e.g. a fuel cell or battery, may also be used.

Each switching element includes a semiconductor device, typically in the form of an Insulated Gate Bipolar Transistor (IGBT).

It is, however, possible to use other types of self-commutated semiconductor devices, such as a gate turn-off thyristor (GTO), a field effect transistor (FET), a metal-oxidesemiconductor field-effect transistor (MOSFET), an injection-enhanced gate transistor (IEGT), an integrated gate commutated thyristor (IGCT), a bimode insulated gate transistor (BIGT) or any other self-commutated switching device. In addition, one or more of the semiconductor devices may instead include a wide-bandgap material such as, but not limited to, silicon carbide, boron nitride, gallium nitride and aluminium nitride.

The number of semiconductor devices in each switching element may vary depending on the required voltage and current ratings of that switching element.

Each of the switching elements also includes a passive current check element that is connected in anti-parallel with a corresponding semiconductor device. The or each passive current check element may include at least one passive current check device. The or each passive current check device may be any device that is capable of limiting current flow in only one direction, e.g. a diode. The number of passive current check devices in each passive current check element may vary depending on the required voltage and current ratings of that passive current check element.

A first exemplary chain-link module may include a first pair of switching elements that are connected in parallel with a capacitor in a known half-bridge arrangement to define a 2-quadrant unipolar module. Switching of the switching elements selectively directs current through the capacitor or causes current to bypass the capacitor, such that the first exemplary chain-link module can provide zero or positive voltage and can conduct current in two directions.

A second exemplary chain-link module may include first and second pairs of switching elements and a capacitor are connected in a known full bridge arrangement to define a 4-quadrant bipolar module. In a similar manner to the first exemplary chain-link module, switching of the switching elements again selectively directs current through the capacitor or causes current to bypass the capacitor such that the second exemplary chain-link module can provide zero, positive or negative voltage and can conduct current in two directions.

Each chain-link converter 24 may include solely first exemplary chain-link modules, solely second exemplary chain-link modules, or a combination of first and second exemplary chain-link modules.

In any event, the provision of a plurality of chain-link modules 26 means that it is possible to build up a combined voltage across each chain-link converter 24, via the insertion of the energy storage devices, i.e. the capacitors, of multiple chain-link modules 26 (with each chain-link module 26 providing its own voltage), which is higher than the voltage available from each individual chain-link module 26.

Accordingly, the chain-link modules 26 work together to permit the chain-link converter 24 to provide a stepped variable voltage source. This permits the generation of a voltage waveform across each chain-link converter 24 using a step-wise approximation. As such each chain-link converter is capable of providing a wide range of complex waveforms.

In addition, the voltage source converter 10 includes a controller 28 which coordinates operation of the chain-link converters 24 to generate an AC voltage waveform at each AC terminal 22A, 22B, 22C, and thereby enable the voltage source converter 10 to, in use, provide power transfer functionality between the AC and DC networks.

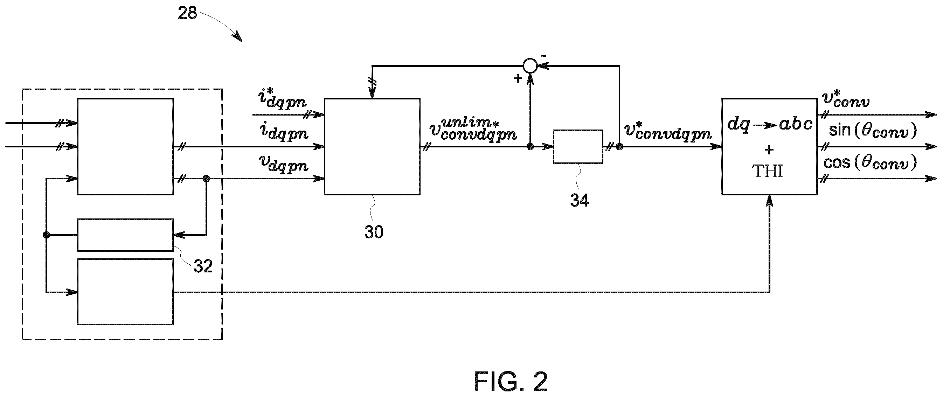

More particularly, as illustrated schematically in Figure 2, the controller 28 is programmed to establish for each AC terminal 22A, 22B, 22C an AC phase voltage demand $v_{conv}^{*}$ that the chain-link converters 24 associated therewith are required to provide at the said corresponding AC terminal 22A, 22B, 22C.

The controller 28 establishes each AC voltage demand $v_{conv}^{*}$ by adding a harmonic voltage injection to a received fundamental AC phase voltage reference. In the embodiment shown, the harmonic voltage injection takes the form of a third harmonic injection (THI) although this need not necessarily be the case, and the fundamental AC phase voltage reference is received from a higher level controller, such as an active and reactive power controller (not shown).

Preferably the third harmonic injection is done at 60° of the electrical angle, and with 1/6 of the magnitude of the fundamental AC phase voltage reference in zero-sequence form, such that it can be cancelled, i.e. removed, by a transformer with a triangle configuration that is connected, in use, with the AC terminals 22A, 22B, 22C.

The received fundamental AC phase voltage reference is additionally prepared to permit dual vector control 30 of decoupled positive and negative sequence current components in a known rotating (dq) reference frame, with a phase angle estimated by a phase locked loop 32, and so takes the form $v_{convdqpn}^{unlimited*}$.

In addition, the controller 28 maintains each established AC phase voltage demand $v_{conv}^{*}$ within a predetermined limit, e.g. 1 per unit (pu), by limiting the magnitude of the fundamental AC phase voltage reference $v_{convdqpn}^{unlimited*}$ based on a contribution each of the fundamental AC phase voltage reference $v_{convdqpn}^{unlimited*}$ and the harmonic voltage injection, i.e. the third harmonic injection, is expected to make to the resulting AC voltage demand $v_{conv}^{*}$.

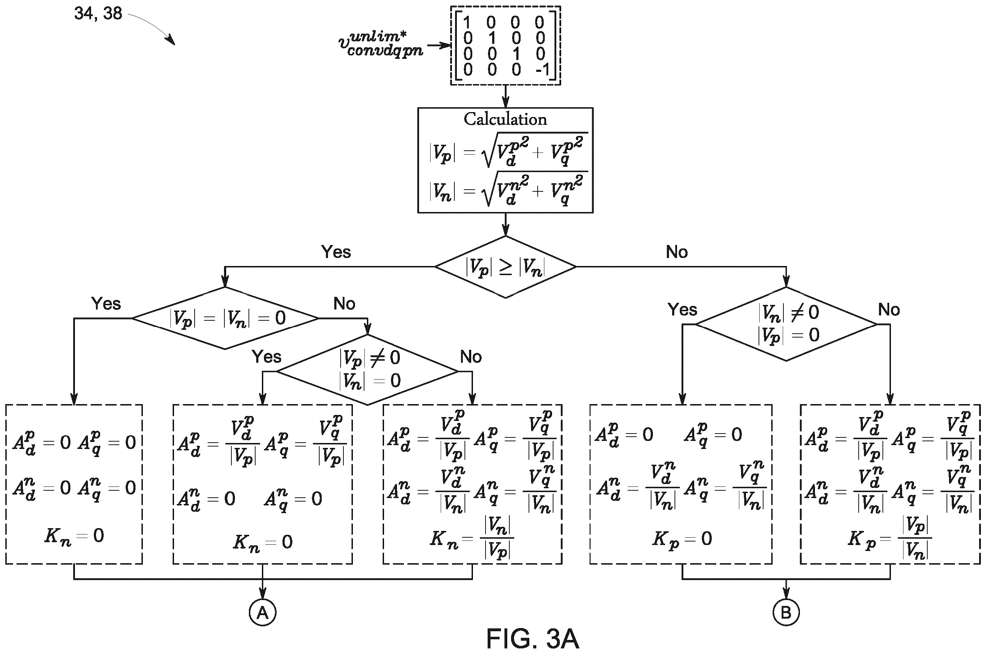

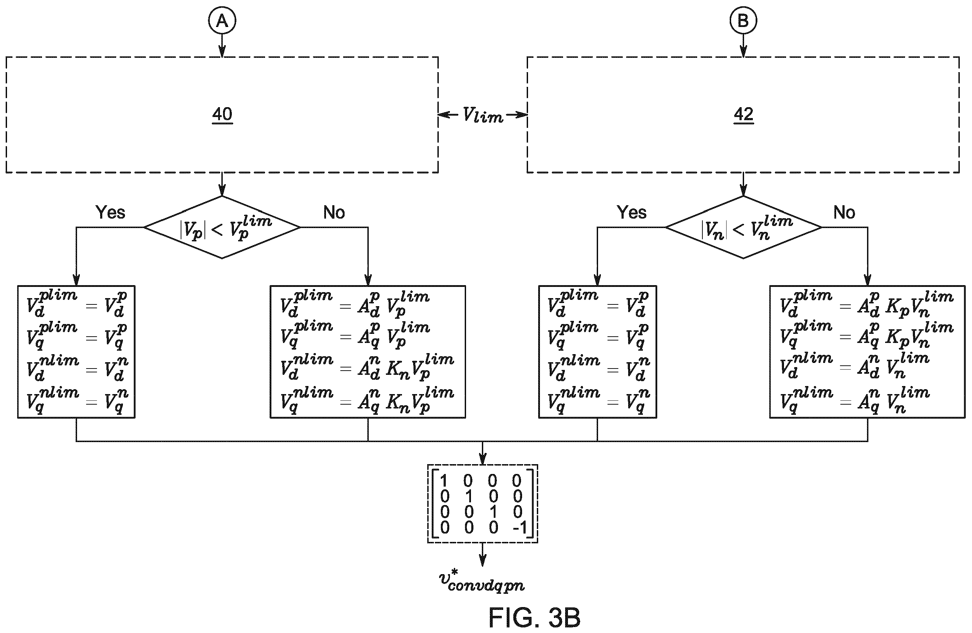

The controller 28 achieves such limiting by carrying out a limiting step 34, the details of which are described hereinbelow and illustrated schematically in Figures 3(a) and 3(b).

As part of the limiting step 34 the controller 28 is programmed to establish a first proportion factor $\alpha_{abc}$ corresponding to the expected contribution of the fundamental AC voltage reference $v_{convdqpn}^{unlimited*}$ and a second proportion factor corresponding to the expected contribution of the harmonic voltage injection.

Establishing the first and second proportion factors $\alpha_{abc}$, $\beta_{abc}$ includes establishing an anticipated maximum resulting AC voltage demand $v^*_{conv}$ .

To establish the anticipated maximum resulting AC voltage demand $v^*_{conv}$ the controller 28 firstly expresses the AC voltage demand $v^*_{conv}$ in terms of positive and negative sequence voltage demands (with the negative sequence having a reversed rotating direction), and then combines these with the third harmonic injection to obtain

$$\mathbf{v}^*_{\mathbf{Conv}} = \mathbf{v}^{\mathbf{p}*}_{\mathbf{Conv}} + \mathbf{v}^{\mathbf{n}*}_{\mathbf{Conv}} - v_{3rd}$$

where,

$v^{p*}_{conv}$ is the positive sequence of the instantaneous phase-to-ground three-phase voltage of the AC voltage demand;

$v^{n*}_{conv}$ is the negative sequence of the instantaneous phase-to-ground three-phase voltage of the AC voltage demand; and

$v_{3rd}$ is the third harmonic voltage injection of the fundamental AC phase voltage reference in zero sequence.

The above can be rearranged to give

$$\mathbf{v}^*_{\mathbf{Conv}} = \begin{bmatrix} \rho_A \sin(\omega t + \phi_A) - \rho_{3rd} \sin(3\omega t + \phi_{3rd}) \\ \rho_B \sin(\omega t + \phi_B) - \rho_{3rd} \sin(3\omega t + \phi_{3rd}) \\ \rho_C \sin(\omega t + \phi_C) - \rho_{3rd} \sin(3\omega t + \phi_{3rd}) \end{bmatrix}$$

where,

$\rho_A$ is the amplitude of phase A of the instantaneous phase-to-ground three-phase voltage of the fundamental AC phase voltage reference;

$\rho_B$ is the amplitude of phase B of the instantaneous phase-to-ground three-phase voltage of the fundamental AC phase voltage reference;

$\rho_C$ is the amplitude of phase C of the instantaneous phase-to-ground three-phase voltage of the fundamental AC phase voltage reference;

$\rho_{3rd}$ is the amplitude of the third harmonic voltage injection;

$\phi_A$ is the phase angle of phase A of the instantaneous phase-to-ground three-phase voltage of the fundamental AC phase voltage reference;

$\phi_B$ is the phase angle of phase B of the instantaneous phase-to-ground three-phase voltage of the fundamental AC phase voltage reference;

$\phi_C$ is the phase angle of phase C of the instantaneous phase-to-ground three-phase voltage of the fundamental AC phase voltage reference;

$\phi_{3rd}$ is the phase angle of the zero sequence third harmonic voltage injection of the fundamental AC phase voltage reference; and

$\omega$ is the angular frequency of the AC network with which the converter 10 is, in use, connected, with the aforementioned amplitudes and phase angles being expressed in the dq-frame of the fundamental AC phase voltage reference.

Thereafter, trigonometric functions are used to transform the respective third harmonic expressions in order to express the resulting AC voltage demand $v^*_{conv}$ in the fundamental frequency domain, i.e.

$$\mathbf{v}^*_{\mathbf{Conv}} = \mathbf{x}^{abc}_{sin} \sin(\omega t) + y_{sin} \sin^3(\omega t) + \mathbf{x}^{abc}_{cos} \cos(\omega t) + y_{cos} \cos^3(\omega t)$$

with $x_{sin}^{abc}$, $x_{cos}^{abc}$, $y_{sin}$, and $y_{cos}$ being expressions of the amplitudes and phase angles.

Now that the AC voltage demand $v_{conv}^{*}$ is expressed in the fundamental frequency domain, the anticipated maximum resulting AC voltage demand $v_{conv}^{*}$ can then be established by estimating an angle $\Theta_{max}^{abc}$ at which the anticipated maximum resulting AC voltage demand $v_{conv}^{*}$ arises.

Such a maximum resulting AC voltage demand $v_{conv}^{*}$ occurs between the two closest minimum peak amplitude $\rho_{3rd}$ of the third harmonic voltage injection and the maximum peak amplitude $\rho_A$, $\rho_B$, $\rho_C$ of the corresponding phase A, B, C of the instantaneous phase-to-ground three-phase voltage of the fundamental AC phase voltage reference.

The controller 28 is programmed to employ an iterative process to estimate for each phase A, B, C the respective angle $\Theta_{max}^{a}$, $\Theta_{max}^{b}$, $\Theta_{max}^{c}$ at which the maximum voltage demand occurs.

In addition, it is possible to pre-locate, i.e. narrow down, the possible minimum peak phase angle $\theta_{min_a}^{3rd}$, $\theta_{min_b}^{3rd}$, $\theta_{min_c}^{3rd}$ of the third harmonic injection and the possible maximum peak phase angle $\theta_{max}^{a}$, $\theta_{max}^{b}$, $\theta_{max}^{c}$ of the corresponding phase A, B, C of the instantaneous phase-to-ground three-phase voltage of the fundamental AC phase voltage reference by shifting and comparing the respective phase angles within each pair $\theta_{min_a}^{3rd}$, $\theta_{max}^{a}$; $\theta_{min_b}^{3rd}$, $\theta_{max}^{b}$; $\theta_{min_c}^{3rd}$, $\theta_{max}^{c}$ to each other, before carrying out the iterative steps. Such pre-locating helps to avoid obtaining multiple solutions, some of which will be erroneous.

Once the controller 28 has identified the closest phase angle pairs, i.e. a phase A angle pair $\theta_{min_a}^{3rd}$, $\theta_{max}^{a}$; a phase B angle pair $\theta_{min_b}^{3rd}$, $\theta_{max}^{b}$; and a phase C angle pair $\theta_{min_c}^{3rd}$, $\theta_{max}^{c}$, the iterative process to establish the respective angle $\Theta_{max}^{a}$, $\Theta_{max}^{b}$, $\Theta_{max}^{c}$ at which the maximum voltage demand occurs involves satisfying the following

$$\left. \frac{d\mathbf{v}_{\mathbf{Conv}}^{*}}{dt} \right|_{\frac{\theta_1 + \theta_2}{2}} = 0$$

Where $\theta_1$ and $\theta_2$ are the respective minimum and maximum phase angles within each pair, and the starting point for the iterative steps.

The controller 28 is programmed to then determine the first and second proportion factors $\alpha_{abc}$, $\beta_{abc}$ by substituting the respective individual estimated angle $\Theta_{max}^{a}$, $\Theta_{max}^{b}$, $\Theta_{max}^{c}$ at which the anticipated maximum voltage demand $v_{conv}^{*}$ occurs into the above equation, i.e. into

$$\mathbf{v}_{\mathbf{Conv}}^{*} = \begin{bmatrix} \rho_A \sin(\omega t + \phi_A) - \rho_{3rd} \sin(3\omega t + \phi_{3rd}) \\ \rho_B \sin(\omega t + \phi_B) - \rho_{3rd} \sin(3\omega t + \phi_{3rd}) \\ \rho_C \sin(\omega t + \phi_C) - \rho_{3rd} \sin(3\omega t + \phi_{3rd}) \end{bmatrix}$$

to give

$$\alpha_{abc} = \sin(\Theta_{max}^{abc} + \phi_{abc})$$
$$\beta_{abc} = \sin(3\Theta_{max}^{abc} + \phi_{3rd})$$

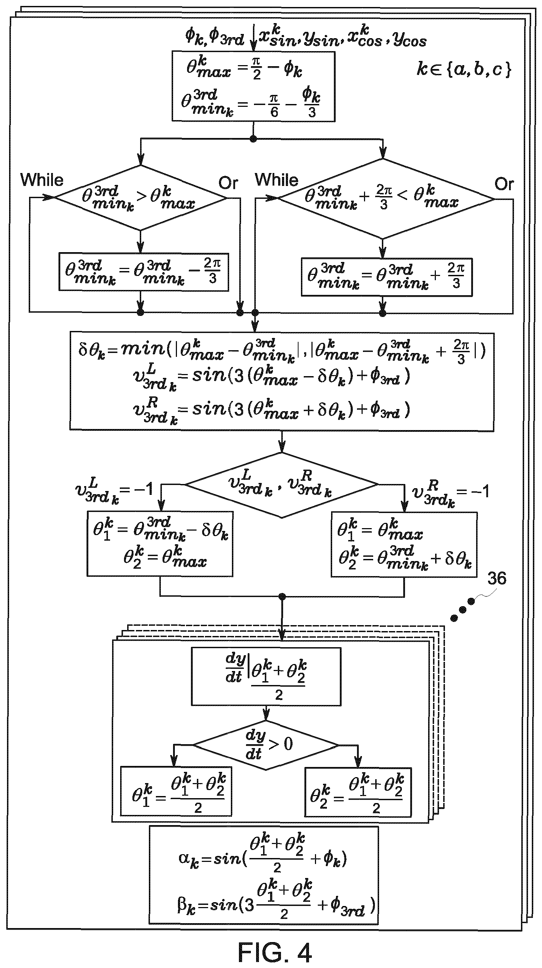

A practical implementation of how the controller 28 can be programmed to carry out the foregoing steps to establish the first and second proportion factors $\alpha_{abc}$, $\beta_{abc}$ is shown schematically in Figure 4, including seven iterations 36 of the iterative steps mentioned above, although fewer than or greater than seven iterations may be carried out instead.

Once the first and second proportion factors $\alpha_{abc}$, $\beta_{abc}$ have been established, the controller 28 is programmed to equate the first proportion factor $\alpha_{abc}$ and amplitude $\rho_A$, $\rho_B$, $\rho_C$ of the corresponding phase A, B, C of the instantaneous phase-to-ground three-phase voltage of the fundamental AC phase voltage reference $v_{convdqpn}^{unlimited*}$, along with the second proportion factor $\beta_{abc}$ and amplitude $\rho_{3rd}$ of the harmonic voltage injection, to the predetermined limit, e.g. 1 per unit (pu), to establish corresponding positive and negative sequence magnitudes $|v_p|$, $|v_p|$ that are applicable to each of the aforementioned amplitudes $\rho_A$, $\rho_B$, $\rho_C$, $\rho_{3rd}$ in order to ensure that the predetermined limit is satisfied, i.e. met. Such established positive and negative sequence magnitudes $|v_p|$, $|v_p|$, i.e. the magnitude of the fundamental AC phase voltage reference $v_{convdqpn}^{unlimited*}$ in positive sequence $|v_p|$ and the magnitude of the fundamental AC phase voltage reference $v_{convdqpn}^{unlimited*}$ in negative sequence $|v_n|$ can be utilised accordingly in specific calculations to maintain the magnitude of the established AC phase voltage demand $v_{conv}^*$ within the predetermined limit.

More particularly, the controller 28 establishes the positive and negative sequence magnitudes $|v_p|$, $|v_p|$ as follows

$$\alpha_a \rho_a - \beta_a \rho_{3rd} = \lim$$

$$\alpha_b \rho_b - \beta_b \rho_{3rd} = \lim$$

$$\alpha_c \rho_c - \beta_c \rho_{3rd} = \lim$$

where,

*lim* is the predetermined amplitude limit, e.g. 1 pu, and
the respective amplitudes $\rho_A$, $\rho_B$, $\rho_C$, $\rho_{3rd}$ can be expressed in terms of the positive and negative sequence magnitudes $|v_p|$, $|v_p|$ in the following manner

$$\rho_A = \sqrt{\left(-\left|v_p\right|\sin(\phi_p)+\left|v_n\right|\sin(\phi_n)\right)^2+\left(\left|v_p\right|\cos(\phi_p)+\left|v_n\right|\cos(\phi_n)\right)^2}$$

$$\rho_B = \sqrt{\left(\left|v_p\right|(\tfrac{1}{2}\sin(\phi_p)+\tfrac{\sqrt{3}}{2}\cos(\phi_p))-\left|v_n\right|(\tfrac{1}{2}\sin(\phi_n)+\tfrac{\sqrt{3}}{2}\cos(\phi_n))\right)^2+\left(\left|v_p\right|(-\tfrac{1}{2}\cos(\phi_p)+\tfrac{\sqrt{3}}{2}\sin(\phi_p))+\left|v_n\right|(-\tfrac{1}{2}\cos(\phi_n)+\tfrac{\sqrt{3}}{2}\sin(\phi_n))\right)^2}$$

$$\rho_C = \sqrt{\left(\left|v_p\right|(\tfrac{1}{2}\sin(\phi_p)-\tfrac{\sqrt{3}}{2}\cos(\phi_p))-\left|v_n\right|(\tfrac{1}{2}\sin(\phi_n)-\tfrac{\sqrt{3}}{2}\cos(\phi_n))\right)^2+\left(\left|v_p\right|(-\tfrac{1}{2}\cos(\phi_p)-\tfrac{\sqrt{3}}{2}\sin(\phi_p))+\left|v_n\right|(-\tfrac{1}{2}\cos(\phi_n)-\tfrac{\sqrt{3}}{2}\sin(\phi_n))\right)^2}$$

$$\rho_{3rd} = \tfrac{1}{6}\sqrt{\left(-\left|v_p\right|\sin(3\phi_p)+\left|v_n\right|\sin(3\phi_n)\right)^2+\left(\left|v_p\right|\cos(3\phi_p)+\left|v_n\right|\cos(3\phi_n)\right)^2}$$

Thereafter, the controller 28 is programmed to limit the magnitude of the fundamental AC phase voltage reference $v_{convdqpn}^{unlimited*}$ using elliptic limiting 38, which in turn incorporates the established positive and negative sequence magnitudes $|v_p|$, $|v_p|$, in the manner shown schematically, by way of example, in Figures 3(a) and 3(b).

Within Figures 3(a) and 3(b),

$v_d^p$ is the d-component of the fundamental AC phase voltage reference $v_{convdqpn}^{unlimited*}$ in positive sequence;

$v_q^p$ is the q-component of the fundamental AC phase voltage reference $v_{convdqpn}^{unlimited*}$ in positive sequence;

$v_d^n$ is the d-component of the fundamental AC phase voltage reference $v_{convdqpn}^{unlimited*}$ in negative sequence;

$v_q^n$ is the q-component of the fundamental AC phase voltage reference $v_{convdqpn}^{unlimited*}$ in negative sequence;

*A* and *K* are expressions of each dq component phase angle, the magnitude portion of the positive and negative sequences; and

$v_{convdqpn}^{*}$ is the resulting limited magnitude version of the initial fundamental AC phase voltage reference $v_{convdqpn}^{unlimited*}$.

In addition, the controller 28 is programmed to extend the elliptic limiting 38 by applying the first proportion factor $\alpha_a$, $\alpha_b$, $\alpha_c$ to an elliptic limiting expression and introducing a harmonic limiting expression incorporating the second proportion factor $\beta_a$, $\beta_b$, $\beta_c$ within respective positive and negative limiting expressions 40, 42.

The resulting limiting expressions 40, 42 for each phase A, B, C, take the general form

$$\left| v_a^{lim} \right| = \frac{\lim}{\alpha_a \sqrt{1 + K^2 + 2K\ (A_{dp}A_{dn} - A_{qp}A_{qn})} - \frac{1}{6}\beta_a \chi_{3rd}^{p}}$$

$$\left| v_b^{lim} \right| = \frac{\lim}{\alpha_b \sqrt{1 + K^2 + K\ (A_{dp}(-A_{dn} - \sqrt{3}A_{qn}) + A_{qp}(-\sqrt{3}A_{dn} + A_{qn}))} - \frac{1}{6}\beta_b \chi_{3rd}^{p}}$$

$$\left| v_c^{lim} \right| = \frac{\lim}{\alpha_c \sqrt{1 + K^2 + K\ (A_{dp}(-A_{dn} + \sqrt{3}A_{qn}) + A_{qp}(\sqrt{3}A_{dn} + A_{qn}))} - \frac{1}{6}\beta_c \chi_{3rd}^{p}}$$

where the respective harmonic limiting expressions for respective negative and positive sequence dominant cases expand to

$$\chi_{3rd}^{p} = \sqrt{(-(3A_{qp} - 4A_{qp}^3) + K_p(3A_{qn} - 4A_{qn}^3))^2 + ((4A_{dp}^3 - 3A_{dp}) + K_p(4A_{dn}^3 - 3A_{dn}))^2}$$

$$\chi_{3rd}^{n} = \sqrt{(-K_n(3A_{qp} - 4A_{qp}^3) + (3A_{qn} - 4A_{qn}^3))^2 + (K_n(4A_{dp}^3 - 3A_{dp}) + (4A_{dn}^3 - 3A_{dn}))^2}$$

So, for example, the positive limiting expression 40 for each phase A, B, C is specifically expressed as follows

$$\left| v_{p_a}^{lim} \right| = \frac{\lim}{\alpha_a \sqrt{1 + K_p^2 + 2K_p(A_{dp}A_{dn} - A_{qp}A_{qn})} - \frac{1}{6}\beta_a \chi_{3rd}^{p}}$$

$$\left| v_{p_b}^{lim} \right| = \frac{\lim}{\alpha_b \sqrt{1 + K_p^2 + K_p(A_{dp}(-A_{dn} - \sqrt{3}A_{qn}) + A_{qp}(-\sqrt{3}A_{dn} + A_{qn}))} - \frac{1}{6}\beta_b \chi_{3rd}^{p}}$$

$$\left|v_{p_c}^{lim}\right| = \frac{\text{lim}}{\alpha_c\sqrt{1+K_p^2+K_p(A_{dp}(-A_{dn}+\sqrt{3}A_{qn})+A_{qp}(\sqrt{3}A_{dn}+A_{qn}))}-\frac{1}{6}\beta_c\chi_{3rd}^p}$$

The controller 28 is further programmed to establish the minimum limited magnitude $|v^{lim}|$ amongst all of limited fundamental AC phase voltage references $\left|v_a^{lim}\right|$, $\left|v_b^{lim}\right|$, $\left|v_c^{lim}\right|$ and to utilise the minimum limited magnitude $|v^{lim}|$ to establish each AC phase voltage demand $v_{conv}^*$, i.e. referring to the limiting expressions 40 in Figure 3(b), the controller 28 establishes the minimum limited magnitude $|v^{lim}|$ according to

$$\left|v^{lim}\right| = \min\left\{\left|v_k^{lim}\right|\right\} \quad k \in \{a,b,c\}$$

Accordingly, by applying the aforementioned extended elliptic limiting, the controller 28 produces a limited magnitude version $v_{convdqpn}^*$ of the initial fundamental AC phase voltage reference $v_{convdqpn}^{unlimited*}$, then adds to this the third harmonic injection (THI) before converting back to the ABC frame to arrive at the required (and now suitably limited) AC phase voltage demand $v_{conv}^*$ that the voltage source converter is required to produce at each AC terminal 22A, 22B, 22C.

**Claims**

1. A voltage source converter (10), for transferring power between AC and DC networks, comprising:

   first and second DC terminals (12, 14) for connection to a DC network and having a plurality of converter limbs (16A, 16B, 16C) extending therebetween, each converter limb (16A, 16B, 16C) including first and second limb portions (18A, 18B, 18C, 20A, 20B, 20C) separated by a corresponding AC terminal (22A, 22B, 22C) for connection to a respective phase (A, B, C) of an AC network, each limb portion (18A, 18B, 18C, 20A, 20B, 20C) including a chain-link converter (24) extending between the associated AC terminal (22A, 22B, 22C) and a corresponding one of the first or the second DC terminals (12, 14), and each chain-link converter (24) including a plurality of series connected chain-link modules (26) each having a plurality of switching elements connected in parallel with an energy storage device, whereby each chain-link converter (24) is controllable to provide a stepped variable voltage source; and
   a controller (28) programmed to establish for each AC terminal (22A, 22B, 22C) an AC phase voltage demand ($v_{conv}^*$) that the chain-link converters (24) associated therewith are required to provide at the said corresponding AC terminal (22A, 22B, 22C),
   the controller (28) establishing each AC voltage demand ($v_{conv}^*$) by adding a harmonic voltage injection to a received fundamental AC phase voltage reference ($v_{convdqpn}^{unlimited*}$), and
   the controller (28) maintaining each established AC phase voltage demand ($v_{conv}^*$) within a predetermined limit (lim) by limiting the magnitude ($|v^{lim}|$) of the fundamental AC phase voltage reference ($v_{convdqpn}^{unlimited*}$) based on a contribution each of the fundamental AC phase voltage reference ($v_{convdqpn}^{unlimited*}$) and the harmonic voltage injection is expected to make to the resulting AC voltage demand ($v_{conv}^*$);
   wherein the controller (28) is programmed to establish a first proportion factor ($\alpha_{abc}$) corresponding to the expected contribution of the fundamental AC voltage reference ($v_{convdqpn}^{unlimited*}$) and a second proportion factor ($\beta_{abc}$) corresponding to the expected contribution of the harmonic voltage injection;
   wherein establishing the first and second proportion factors ($\alpha_{abc}$, $\beta_{abc}$) includes establishing an anticipated maximum resulting AC voltage demand ($v_{conv}^*$) by estimating, using an iterative process (36), an angle (

$\Theta_{max}^a$, $\Theta_{max}^b$, $\Theta_{max}^c$ ) at which the anticipated maximum resulting AC voltage demand ( $v_{conv}^*$ ) arises, and using the estimated angle ( $\Theta_{max}^a$, $\Theta_{max}^b$, $\Theta_{max}^c$ ) to determine the first and second proportion factors ($\alpha_{abc}$, $\beta_{abc}$) at the anticipated maximum resulting AC voltage demand ( $v_{conv}^*$ );

wherein the controller (28) is programmed to equate the first proportion factor ($\alpha_{abc}$) and amplitude ($\rho_A$, $\rho_B$, $\rho_C$) of the fundamental AC voltage reference ( $v_{convdqpn}^{unlimited*}$ ) along with the second proportion factor ($\beta_{abc}$) and amplitude ($\rho_{3rd}$) of the harmonic voltage injection to the predetermined limit (*lim*) to establish corresponding positive and negative sequence magnitudes ($|v_p|$, $|v_n|$) applicable to each said amplitude ($\rho_A$, $\rho_B$, $\rho_C$, $\rho_{3rd}$) in order to meet the predetermined limit (*lim*).

2. A voltage source converter (10) according to Claim 1 wherein the controller (28) is programmed to limit the magnitude ($|v^{lim}|$) of the fundamental AC phase voltage reference ( $v_{convdqpn}^{unlimited*}$ ) using elliptic limiting (38) incorporating the established positive and negative sequence magnitudes ($|v_p|$, $|v_n|$).

3. A voltage source converter (10) according to Claim 2 wherein the controller (28) is programmed to extend the elliptic limiting (38) by applying the first proportion factor ($\alpha_a$, $\alpha_b$, $\alpha_c$) to an elliptic limiting expression and introducing a harmonic limiting expression incorporating the second proportion factor ($\beta_a$, $\beta_b$, $\beta_c$).

4. A voltage source converter (10) according to any preceding claim wherein the controller (28) is programmed to establish the minimum limited magnitude ($|v^{lim}|$) amongst all of limited fundamental AC phase voltage references ( $\left|v_a^{lim}\right|$, $\left|v_b^{lim}\right|$, $\left|v_c^{lim}\right|$ ) and to utilise the minimum limited magnitude ($|v^{lim}|$) of fundamental AC phase voltage reference to establish each AC phase voltage demand ( $v_{conv}^*$ ).

5. A method of controlling a voltage source converter (10) including first and second DC terminals (12, 14) for connection to a DC network and having a plurality of converter limbs (16A, 16B, 16C) extending therebetween, each converter limb (16A, 16B, 16C) including first and second limb portions (18A, 18B, 18C, 20A, 20B, 20C) separated by a corresponding AC terminal (22A, 22B, 22C) for connection to a respective phase (A, B, C) of an AC network, each limb portion (18A, 18B, 18C, 20A, 20B, 20C) including a chain-link converter (24) extending between the associated AC terminal (22A, 22B, 22C) and a corresponding one of the first or the second DC terminals (12, 14), and each chain-link converter (24) including a plurality of series connected chain-link modules (26) each having a plurality of switching elements connected in parallel with an energy storage device, whereby each chain-link converter (24) is controllable to provide a stepped variable voltage source,

the method comprising the steps of:

(a) establishing for each AC terminal (22A, 22B, 22C) an AC phase voltage demand ( $v_{conv}^*$ ) that the chain-link converters (24) associated therewith are required to provide at the said corresponding AC terminal (22A, 22B, 22C);

(b) establishing each AC voltage demand ( $v_{conv}^*$ ) by adding a harmonic voltage injection to a received fundamental AC phase voltage reference ( $v_{convdqpn}^{unlimited*}$ ); and

(c) maintaining each established AC phase voltage demand ( $v_{conv}^*$ ) within a predetermined limit (*lim*) by limiting the magnitude ($|v^{lim}|$) of the fundamental AC phase voltage reference ( $v_{convdqpn}^{unlimited*}$ ) based on a contribution each of the fundamental AC phase voltage reference ( $v_{convdqpn}^{unlimited*}$ ) and the harmonic voltage injection is expected to make to the resulting AC voltage demand ( $v_{conv}^*$ ); establishing a first proportion factor ($\alpha_{abc}$) corresponding to the expected contribution of the fundamental AC voltage reference ( $v_{convdqpn}^{unlimited*}$ ) and a second proportion factor ($\beta_{abc}$) corresponding to the expected contribution of the harmonic voltage injection;

wherein establishing the first and second proportion factors ($\alpha_{abc}$, $\beta_{abc}$) includes establishing an anticipated maximum resulting AC voltage demand ($v^*_{conv}$) by estimating, using an iterative process (36), an angle ($\Theta^a_{max}$, $\Theta^b_{max}$, $\Theta^c_{max}$) at which the anticipated maximum resulting AC voltage demand ($v^*_{conv}$) arises, and using the estimated angle ($\Theta^a_{max}$, $\Theta^b_{max}$, $\Theta^c_{max}$) to determine the first and second proportion factors ($\alpha_{abc}$, $\beta_{abc}$) at the anticipated maximum resulting AC voltage demand ($v^*_{conv}$); and

(d) equating the first proportion factor ($\alpha_{abc}$) and amplitude ($\rho_A$, $\rho_B$, $\rho_C$) of the fundamental AC voltage reference ($v^{unlimited*}_{convdqpn}$) along with the second proportion factor ($\beta_{abc}$) and amplitude ($\rho_{3rd}$) of the harmonic voltage injection to the predetermined limit (*lim*) to establish corresponding positive and negative sequence magnitudes (|$v_p$|, |$v_n$|) applicable to each said amplitude ($\rho_A$, $\rho_B$, $\rho_C$, $\rho_{3rd}$) in order to meet the predetermined limit (*lim*).

## Patentansprüche

1. Spannungsquellenwandler (10) zum Übertragen von Leistung zwischen Wechselstrom- und Gleichstromnetzen, umfassend:

erste und zweite Gleichstromanschlüsse (12, 14) zum Anschluss an ein Gleichstromnetz und aufweisend eine Vielzahl von Wandlerschenkeln (16A, 16B, 16C), die sich zwischen diesen erstrecken, wobei jeder Wandlerschenkel (16A, 16B, 16C) einen ersten und einen zweiten Schenkelabschnitt (18A, 18B, 18C, 20A, 20B, 20C) einschließt, die durch einen entsprechenden Wechselstromanschluss (22A, 22B, 22C) getrennt sind, zum Anschluss an eine jeweiligen Phase (A, B, C) eines Wechselstromnetzes, wobei jeder Schenkelabschnitt (18A, 18B, 18C, 20A, 20B, 20C) einen Kettengliedwandler (24) einschließt, der sich zwischen dem zugehörigen Wechselstromanschluss (22A, 22B, 22C) und einem entsprechenden der ersten oder zweiten Gleichstromanschluss (12, 14) erstreckt, und wobei jeder Kettengliedwandler (24) eine Vielzahl von in Reihe geschalteten Kettengliedmodulen (26) einschließt, die jeweils eine Vielzahl von Schaltelementen aufweisen, die mit einer Energiespeichervorrichtung parallel geschaltet sind, wodurch jeder Kettengliedwandler (24) steuerbar ist, um eine stufenweise variable Spannungsquelle bereitzustellen; und

eine Steuereinheit (28), die so programmiert ist, dass sie für jeden Wechselstromanschluss (22A, 22B, 22C) einen Wechselstrom-Phasenspannungsbedarf ($v^*_{konv}$) festlegt, den die zugeordneten Kettengliedwandler (24) an dem entsprechenden Wechselstromanschluss (22A, 22B, 22C) bereitstellen müssen,

wobei die Steuereinheit (28) jeden Wechselstrom-Spannungsbedarf ($v^*_{konv}$) durch Hinzufügen einer Oberschwingungs-Spannungseinspeisung zu einer empfangenen Grundwellen-Wechselstrom-Phasenspannungsreferenz (($v^{unbegrenzt*}_{convdqpn}$) festlegt, und

wobei die Steuereinheit (28) jeden festgelegten Wechselstrom-Phasenspannungsbedarf ($v^*_{konv}$) innerhalb einer vorbestimmten Grenze (*lim*) hält, indem sie den Betrag (|$v^{lim}$|) der Grundwellen-Wechselstrom-Phasenspannungsreferenz ($v^{unbegrenzt*}_{convdqpn}$) auf der Grundlage eines Beitrags begrenzt, den die Grundwellen-Wechselstrom-Phasenspannungsreferenz ($v^{unbegrenzt*}_{convdqpn}$) und die Oberschwingungs-Spannungseinspeisung erwartungsgemäß zum resultierenden Wechselstrom-Spannungsbedarf ($v^*_{konv}$) leisten werden;

wobei die Steuereinheit (28) so programmiert ist, dass sie einen ersten Proportionalitätsfaktor ($\alpha_{abc}$) entsprechend dem erwarteten Beitrag der Grundwellen-Wechselspannungsreferenz ($v^{unbegrenzt*}_{convdqpn}$) und einen zweiten Proportionalitätsfaktor ($\beta_{abc}$) entsprechend dem erwarteten Beitrag der Oberschwingungs-Spannungseinspeisung festlegt;

wobei das Festlegen des ersten und zweiten Proportionalitätsfaktors ($\alpha_{abc}$, $\beta_{abc}$) das Festlegen eines erwarteten maximalen resultierenden Wechselstrom-Spannungsbedarfs ($v^*_{konv}$) durch Schätzen, unter Verwendung eines iterativen Prozesses (36) eines Winkels ( $\Theta_{max}^{a}$, $\Theta_{max}^{b}$, $\Theta_{max}^{c}$ ), bei dem der erwartete maximale resultierende Wechselstrom-Spannungsbedarf ( $v_{konv}^{*}$ ) auftritt, und Verwenden des geschätzten Winkels ( $\Theta_{max}^{a}$, $\Theta_{max}^{b}$, $\Theta_{max}^{c}$ ) einschließt, um den ersten und zweiten Proportionalitätsfaktor ($\alpha_{abc}$, $\beta_{abc}$) bei dem erwarteten maximalen resultierenden Wechselstrom-Spannungsbedarf ( $v_{konv}^{*}$ ) zu bestimmen;
wobei die Steuereinheit (28) so programmiert ist, dass sie den ersten Proportionalitätsfaktor ($\alpha_{abc}$) und die Amplitude ($\rho_A$, $\rho_B$, $\rho_C$) der Grundwellen-Wechselstrom-Spannungsreferenz ( $v_{convdqpn}^{unbegrenzt*}$ ) zusammen mit dem zweiten Proportionalitätsfaktor ($\beta_{abc}$) und der Amplitude ($\rho_3$) der Oberschwingungs-Spannungseinspeisung mit dem vorbestimmten Grenzwert *(lim)* gleichsetzt, um entsprechende positive und negative Sequenzbeträge ($|v_p|$, $|v_n|$) festzulegen, die auf jede dieser Amplituden ($\rho_A$, $\rho_B$, $\rho_C$, $\rho_3$) anwendbar sind, um den vorbestimmten Grenzwert *(lim)* zu erfüllen.

2. Spannungsquellenwandler (10) nach Anspruch 1, wobei die Steuereinheit (28) so programmiert ist, dass sie den Betrag ($|v^{lim}|$) der Grundwellen-Wechselstrom-Spannungsreferenz ( $v_{convdqpn}^{unbegrenzt*}$ ) unter Verwendung von elliptischer Begrenzung (38) begrenzt, die die festgelegten positiven und negativen Sequenzbeträge ($|v_p|$, $|v_n|$) einbezieht.

3. Spannungsquellenwandler (10) nach Anspruch 2, wobei die Steuereinheit (28) so programmiert ist, dass sie die elliptische Begrenzung (38) erweitert, indem sie den ersten Proportionalitätsfaktor ($\alpha_a$, $\alpha_b$, $\alpha_c$) auf einen elliptischen Begrenzungsausdruck anwendet und einen Oberschwingungs- Begrenzungsausdruck einführt, der den zweiten Proportionalitätsfaktor ($\beta_a$, $\beta_b$, $\beta_c$) einbezieht.

4. Spannungsquellenwandler (10) nach einem vorstehenden Anspruch, wobei die Steuereinheit (28) so programmiert ist, dass sie den minimalen begrenzten Betrag ($|v^{lim}|$) unter allen begrenzten Grundwellen-Wechselstrom-Spannungsreferenzwerten ( $\left|v_a^{lim}\right|$, $\left|v_b^{lim}\right|$, $\left|v_c^{lim}\right|$ ) festlegt und den minimalen begrenzten Betrag ($|v^{lim}|$) des Grundwellen-Wechselstrom-Spannungsreferenzwerts nutzt, um jeden Wechselstrom-Phasenspannungsbedarf ( $v_{konv}^{*}$ ) festzulegen.

5. Verfahren zum Steuern eines Spannungsquellenwandlers (10) einschließend einen ersten und einem zweiten Gleichstromanschluss (12, 14) zum Anschluss an ein Gleichstromnetz und aufweisend eine Vielzahl von Wandlerschenkeln (16A, 16B, 16C), die sich dazwischen erstrecken, wobei jeder Wandlerschenkel (16A, 16B, 16C) einen ersten und einen zweiten Schenkelabschnitt (18A, 18B, 18C, 20A, 20B, 20C) einschließt, die durch einen entsprechenden Wechselstromanschluss (22A, 22B, 22C) getrennt sind, zum Anschluss an eine jeweiligen Phase (A, B, C) eines Wechselstromnetzes, wobei jeder Schenkelabschnitt (18A, 18B, 18C, 20A, 20B, 20C) einen Kettengliedwandler (24) einschließt, der sich zwischen dem zugehörigen Wechselstromanschluss (22A, 22B, 22C) und einem entsprechenden der ersten oder zweiten Gleichstromanschluss (12, 14) erstreckt, und wobei jeder Kettengliedwandler (24) eine Vielzahl von in Reihe geschalteten Kettengliedmodulen (26) einschließt, die jeweils eine Vielzahl von Schaltelementen aufweisen, die mit einer Energiespeichervorrichtung parallel geschaltet sind, wodurch jeder Kettengliedwandler (24) steuerbar ist, um eine stufenweise variable Spannungsquelle bereitzustellen;
wobei das Verfahren die folgenden Schritte umfasst:

(a) Festlegen, für jeden Wechselstromanschluss (22A, 22B, 22C), eines Wechselstrom-Phasenspannungsbedarfs ( $v_{konv}^{*}$ ), den die zugehörigen Kettengliedwandler (24) am jeweiligen entsprechenden Wechselstromanschluss (22A, 22B, 22C) bereitstellen müssen;

(b) Festlegen jedes Wechselstrom-Spannungsbedarfs ( $v_{konv}^{*}$ ) durch Hinzufügen einer Oberschwingungs-Spannungseinspeisung zu einer empfangenen Grundwellen-Wechselstrom-Spannungsreferenz ( $v_{convdqpn}^{unbegrenzt*}$ ); und

(c) Aufrechterhalten des jeweiligen festgelegten Wechselstrom-Phasenspannungsbedarfs ( $v_{konv}^{*}$ ) innerhalb einer vorbestimmten Grenze *(lim)* indem sie den Betrag ($|v^{lim}|$) der Grundwellen-Wechselstrom-Spannungsreferenz ( $v_{convdqpn}^{unbegrenzt*}$ ) auf der Grundlage eines Beitrags begrenzt, den jeweils die Grundwellen-Wechselstrom-Spannungsreferenz ( $v_{convdqpn}^{unbegrenzt*}$ ) und die Oberschwingungs-Spannungseinspeisung erwartungsgemäß zum resultierenden Wechselstrom-Spannungsbedarf ( $v_{konv}^{*}$ ) leisten werden;

Festlegen eines ersten Proportionalitätsfaktors ($\alpha_{abc}$) entsprechend dem erwarteten Beitrag der Grundwellen-Wechselstrom-Spannungsreferenz ( $v_{convdqpn}^{unbegrenzt*}$ ) und eines zweiten Proportionalitätsfaktors ($\beta_{abc}$) entsprechend dem erwarteten Beitrag der Oberschwingungs-Spannungseinspeisung;

wobei das Festlegen des ersten und zweiten Proportionalitätsfaktors ($\alpha_{abc}$, $\beta_{abc}$) das Festlegen eines erwarteten maximalen resultierenden Wechselstrom-Spannungsbedarfs ( $v_{konv}^{*}$ ) durch Schätzen eines Winkels ( $\Theta_{max}^{a}$, $\Theta_{max}^{b}$, $\Theta_{max}^{c}$ ) einschließt, bei dem der erwartete maximale resultierende Wechselstrom-Phasenspannungsbedarf ( $v_{konv}^{*}$ ) auftritt, unter Verwendung eines iterativen Prozesses (36), und Verwenden des geschätzten Winkels ( $\Theta_{max}^{a}$, $\Theta_{max}^{b}$, $\Theta_{max}^{c}$ ), um den ersten und zweiten Proportionalitätsfaktor ($\alpha_{abc}$, $\beta_{abc}$) bei dem erwarteten maximalen resultierenden Wechselstrom-Spannungsbedarf ( $v_{konv}^{*}$ ) zu bestimmen; und

(d) Gleichsetzen des ersten Proportionalitätsfaktors ($\alpha_{abc}$) und der Amplitude ($\rho_A$, $\rho_B$, $\rho_C$) der Grundwellen-Wechselstrom-Spannungsreferenz ( $v_{convdqpn}^{unbegrenzt*}$ ) zusammen mit dem zweiten Proportionalitätsfaktor ($\beta_{abc}$) und der Amplitude ($\rho_3$) der Oberschwingungs-Spannungseinspeisung mit dem vorbestimmten Grenzwert (*lim*), um entsprechende positive und negative Sequenzbeträge ($|v_p|$, $|v_n|$) festzulegen, die auf jede dieser Amplituden ($\rho_A$, $\rho_B$, $\rho_C$, $\rho_3$.) anwendbar sind, um den vorbestimmten Grenzwert (*lim*) zu erfüllen.

## Revendications

1. Convertisseur de source de tension (10), pour transférer du courant entre des réseaux CA et CC, comprenant :

des première et seconde bornes CC (12, 14) pour une connexion à un réseau CC et présentant une pluralité de branches de convertisseur (16A, 16B, 16C) s'étendant entre celles-ci, chaque branche de convertisseur (16A, 16B, 16C) incluant des première et seconde parties de branche (18A, 18B, 18C, 20A, 20B, 20C) séparées par une borne CA (22A, 22B, 22C) correspondante pour la connexion à une phase respective (A, B, C) d'un réseau CA, chaque partie de branche (18A, 18B, 18C, 20A, 20B, 20C) incluant un convertisseur à maillons de chaîne (24) s'étendant entre la borne CA associée (22A, 22B, 22C) et une correspondante des première et seconde bornes CC (12, 14), et chaque convertisseur à maillons de chaîne (24) incluant une pluralité de modules à maillons de chaîne (26) connectés en série, présentant chacun une pluralité d'éléments de commutation connectés en parallèle avec un dispositif de stockage d'énergie, selon lequel chaque convertisseur à maillons de chaîne (24) est commandable pour fournir une source de tension variable par paliers ; et

un dispositif de commande (28) programmé pour établir pour chaque borne CA (22A, 22B, 22C) une demande de tension de phase CA ( $v_{conv}^{*}$ ) que les convertisseurs à maillons de chaîne (24) associés à celle-ci doivent fournir à ladite borne CA (22A, 22B, 22C) correspondante,

le dispositif de commande (28) établissant chaque demande de tension CA ( $v_{conv}^{*}$ ) en ajoutant une injection de tension harmonique à une référence de tension de phase CA fondamentale reçue ( $v_{convdqpn}^{illimité*}$ ), et

le dispositif de commande (28) maintenant chaque demande de tension de phase CA établie ( $v_{conv}^{*}$ ) dans une limite prédéterminée (*lim*) en limitant la magnitude ($|v^{lim}|$) de la référence de tension de phase CA fondamentale ( $v_{convdqpn}^{illimité*}$ ) sur la base d'une contribution attendue de chacune de la référence de tension de phase CA fondamentale ( $v_{convdqpn}^{illimité*}$ ) et de l'injection de tension harmonique à la demande de tension CA résultante ( $v_{conv}^{*}$ );

dans lequel le dispositif de commande (28) est programmé pour établir un premier facteur de proportion ($\alpha_{abc}$)

correspondant à la contribution attendue de la référence de tension CA fondamentale ($v_{convdqpn}^{illimité*}$) et un second facteur de proportion ($\beta_{abc}$) correspondant à la contribution attendue de l'injection de tension harmonique ; dans lequel l'établissement des premier et second facteurs de proportion ($\alpha_{abc}$, $\beta_{abc}$) inclut l'établissement d'une demande de tension CA résultante maximale anticipée ($v_{conv}^*$) en estimant, à l'aide d'un processus itératif (36), un angle ($\Theta_{max}^a$, $\Theta_{max}^b$, $\Theta_{max}^c$) auquel la demande de tension CA résultante maximale anticipée ($v_{conv}^*$) se produit, et l'utilisation de l'angle estimé ($\Theta_{max}^a$, $\Theta_{max}^b$, $\Theta_{max}^c$) pour déterminer les premier et second facteurs de proportion ($\alpha_{abc}$, $\beta_{abc}$) à la demande de tension CA résultante maximale anticipée ($v_{conv}^*$) ;

dans lequel le dispositif de commande (28) est programmé pour corréler le premier facteur de proportion ($\alpha_{abc}$) et l'amplitude ($\rho_A$, $\rho_B$, $\rho_C$) de la référence de tension CA fondamentale ($v_{convdqpn}^{illimité*}$) avec le second facteur de proportion ($\beta_{abc}$) et l'amplitude ($\rho_{3rd}$) de l'injection de tension harmonique jusqu'à la limite prédéterminée (*lim*) pour établir des magnitudes de séquence positive et négative ($|v_p|$, $|v_n|$) correspondantes applicables à chaque dite amplitude ($\rho_A$, $\rho_B$, $\rho_C$, $\rho_{3rd}$) afin de respecter la limite prédéterminée (*lim*).

2. Convertisseur de source de tension (10) selon la revendication 1 dans lequel le dispositif de commande (28) est programmé pour limiter la magnitude ($|v^{lim}|$) de la référence de tension de phase CA fondamentale ($v_{convdqpn}^{illimité*}$) à l'aide d'une limitation elliptique (38) incorporant les magnitudes de séquence positive et négative établies ($|v_p|$, $|v_n|$).

3. Convertisseur de source de tension (10) selon la revendication 2 dans lequel le dispositif de commande (28) est programmé pour étendre la limitation elliptique (38) en appliquant le premier facteur de proportion ($\alpha_a$, $\alpha_b$, $\alpha_c$) à une expression de limitation elliptique et en introduisant une expression de limitation harmonique incorporant le second facteur de proportion ($\beta_a$, $\beta_b$, $\beta_c$).

4. Convertisseur de source de tension (10) selon une quelconque revendication précédente dans lequel le dispositif de commande (28) est programmé pour établir la magnitude limitée minimale ($|v^{lim}|$) parmi toutes les références de tension de phase CA fondamentales limitées ($\left|v_a^{lim}\right|$, $\left|v_b^{lim}\right|$, $\left|v_c^{lim}\right|$) et pour utiliser la magnitude limitée minimale ($|v^{lim}|$) de référence de tension de phase CA fondamentale pour établir chaque demande de tension de phase CA ($v_{conv}^*$).

5. Procédé de commande d'un convertisseur de source de tension (10) incluant des première et seconde bornes CC (12, 14) pour une connexion à un réseau CC et présentant une pluralité de branches de convertisseur (16A, 16B, 16C) s'étendant entre celles-ci, chaque branche de convertisseur (16A, 16B, 16C) incluant des première et seconde parties de branche (18A, 18B, 18C, 20A, 20B, 20C) séparées par une borne CA (22A, 22B, 22C) correspondante pour la connexion à une phase respective (A, B, C) d'un réseau CA, chaque partie de branche (18A, 18B, 18C, 20A, 20B, 20C) incluant un convertisseur à maillons de chaîne (24) s'étendant entre la borne CA associée (22A, 22B, 22C) et une correspondante des première et seconde bornes CC (12, 14), et chaque convertisseur à maillons de chaîne (24) incluant une pluralité de modules à maillons de chaîne (26) connectés en série présentant chacun une pluralité d'éléments de commutation connectés en parallèle avec un dispositif de stockage d'énergie, selon lequel chaque convertisseur à maillons de chaîne (24) est commandable pour fournir une source de tension variable par paliers, le procédé comprenant les étapes de :

(a) établissement pour chaque borne CA (22A, 22B, 22C) d'une demande de tension de phase CA ($v_{conv}^*$) que les convertisseurs à maillons de chaîne (24) associés à celle-ci doivent fournir à ladite borne CA (22A, 22B, 22C) correspondante ;

(b) établissement de chaque demande de tension CA ($v_{conv}^*$) en ajoutant une injection de tension harmonique à une référence de tension de phase CA fondamentale reçue ($v_{convdqpn}^{illimité*}$) ; et

(c) maintien de chaque demande de tension de phase CA établie ($v_{conv}^*$) dans une limite prédéterminée (*lim*) en limitant la magnitude ($|v^{lim}|$) de la référence de tension de phase CA fondamentale ($v_{convdqpn}^{illimité*}$) sur la base

d'une contribution attendue de chacune de la référence de tension de phase CA fondamentale ( $v_{convdqpn}^{illimité*}$ ) et de l'injection de tension harmonique à la demande de tension CA résultante ( $v_{conv}^*$ );

établissement d'un premier facteur de proportion ($\alpha_{abc}$) correspondant à la contribution attendue de la référence de tension CA fondamentale ( $v_{convdqpn}^{illimité*}$ ) et un second facteur de proportion ($\beta_{abc}$) correspondant à la contribution attendue de l'injection de tension harmonique ;

dans lequel l'établissement des premier et second facteurs de proportion ($\alpha_{abc}$, $\beta_{abc}$) inclut l'établissement d'une demande de tension CA résultante maximale anticipée ( $v_{conv}^*$ ) en estimant, à l'aide d'un processus itératif (36), un angle ( $\Theta_{max}^a$, $\Theta_{max}^b$, $\Theta_{max}^c$ ) auquel la demande de tension CA résultante maximale anticipée ( $v_{conv}^*$ ) se produit, et l'utilisation de l'angle estimé ( $\Theta_{max}^a$, $\Theta_{max}^b$, $\Theta_{max}^c$ ) pour déterminer les premier et second facteurs de proportion ($\alpha_{abc}$, $\beta_{abc}$) à la demande de tension CA résultante maximale anticipée ( $v_{conv}^*$ ) ; et

(d) corrélation du premier facteur de proportion ($\alpha_{abc}$) et de l'amplitude ($\rho_A$, $\rho_B$, $\rho_C$) de la référence de tension CA fondamentale ( $v_{convdqpn}^{illimité*}$ ) avec le second facteur de proportion ($\beta_{abc}$) et l'amplitude ($\rho_{3rd}$) de l'injection de tension harmonique jusqu'à la limite prédéterminée *(lim)* pour établir des magnitudes de séquence positive et négative ($|v_p|$, $|v_n|$) correspondantes applicables à chaque dite amplitude ($\rho_A$, $\rho_B$, $\rho_C$, $\rho_{3rd}$) afin de respecter la limite prédéterminée *(lim)*.

FIG. 1

FIG. 2

34, 38

$$v_{convdqpn}^{unlim*} \rightarrow \begin{bmatrix} 1 & 0 & 0 & 0 \\ 0 & 1 & 0 & 0 \\ 0 & 0 & 1 & 0 \\ 0 & 0 & 0 & -1 \end{bmatrix}$$

Calculation

$$|V_p| = \sqrt{V_d^{p2} + V_q^{p2}}$$

$$|V_n| = \sqrt{V_d^{n2} + V_q^{n2}}$$

Yes $\qquad |V_p| \geq |V_n| \qquad$ No

Yes $\qquad |V_p| = |V_n| = 0 \qquad$ No

Yes $\qquad |V_p| \neq 0,\ |V_n| = 0 \qquad$ No

Yes $\qquad |V_n| \neq 0,\ |V_p| = 0 \qquad$ No

$$A_d^p = 0 \quad A_q^p = 0$$
$$A_d^n = 0 \quad A_q^n = 0$$
$$K_n = 0$$

$$A_d^p = \frac{V_d^p}{|V_p|} \quad A_q^p = \frac{V_q^p}{|V_p|}$$
$$A_d^n = 0 \qquad A_q^n = 0$$
$$K_n = 0$$

$$A_d^p = \frac{V_d^p}{|V_p|} \quad A_q^p = \frac{V_q^p}{|V_p|}$$
$$A_d^n = \frac{V_d^n}{|V_n|} \quad A_q^n = \frac{V_q^n}{|V_n|}$$
$$K_n = \frac{|V_n|}{|V_p|}$$

$$A_d^p = 0 \qquad A_q^p = 0$$
$$A_d^n = \frac{V_d^n}{|V_n|} \quad A_q^n = \frac{V_q^n}{|V_n|}$$
$$K_p = 0$$

$$A_d^p = \frac{V_d^p}{|V_p|} \quad A_q^p = \frac{V_q^p}{|V_p|}$$
$$A_d^n = \frac{V_d^n}{|V_n|} \quad A_q^n = \frac{V_q^n}{|V_n|}$$
$$K_p = \frac{|V_p|}{|V_n|}$$

Ⓐ

Ⓑ

FIG. 3A

FIG. 3B

$$\phi_k, \phi_{3rd} \downarrow x_{sin}^k, y_{sin}, x_{cos}^k, y_{cos}$$

$$\theta_{max}^k = \frac{\pi}{2} - \phi_k$$

$$\theta_{min_k}^{3rd} = -\frac{\pi}{6} - \frac{\phi_k}{3}$$

$$k \in \{a, b, c\}$$

While $\quad \theta_{min_k}^{3rd} > \theta_{max}^k \quad$ Or

$$\theta_{min_k}^{3rd} = \theta_{min_k}^{3rd} - \frac{2\pi}{3}$$

While $\quad \theta_{min_k}^{3rd} + \frac{2\pi}{3} < \theta_{max}^k \quad$ Or

$$\theta_{min_k}^{3rd} = \theta_{min_k}^{3rd} + \frac{2\pi}{3}$$

$$\delta\theta_k = min(|\theta_{max}^k - \theta_{min_k}^{3rd}|, |\theta_{max}^k - \theta_{min_k}^{3rd} + \frac{2\pi}{3}|)$$
$$v_{3rd\,k}^L = sin(3(\theta_{max}^k - \delta\theta_k) + \phi_{3rd})$$
$$v_{3rd\,k}^R = sin(3(\theta_{max}^k + \delta\theta_k) + \phi_{3rd})$$

$v_{3rd\,k}^L = -1 \quad\qquad v_{3rd\,k}^L, v_{3rd\,k}^R \qquad\quad v_{3rd_k}^R = -1$

$$\theta_1^k = \theta_{min_k}^{3rd} - \delta\theta_k$$
$$\theta_2^k = \theta_{max}^k$$

$$\theta_1^k = \theta_{max}^k$$
$$\theta_2^k = \theta_{min_k}^{3rd} + \delta\theta_k$$

36

$$\frac{dy}{dt}\Big|\frac{\theta_1^k + \theta_2^k}{2}$$

$$\frac{dy}{dt} > 0$$

$$\theta_1^k = \frac{\theta_1^k + \theta_2^k}{2}$$

$$\theta_2^k = \frac{\theta_1^k + \theta_2^k}{2}$$

$$\alpha_k = sin(\frac{\theta_1^k + \theta_2^k}{2} + \phi_k)$$

$$\beta_k = sin(3\frac{\theta_1^k + \theta_2^k}{2} + \phi_{3rd})$$

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **LI RU et al.** Enhanced Flat -Topped Modulation for MMC Control in HVDC Transmission Systems. *IEEE TRANSACTIONS ON POWER DELIVERY*, February 2017, vol. 32 (1), 152-161